# EUROPEAN PATENT SPECIFICATION

(11) **EP 3 190 020 B1**
(45) Date of publication and mention of the grant of the patent: **05.08.2020**
(21) Application number: 14901134.8
(22) Date of filing: 04.09.2014
(51) Int. Cl.: B60W 10/06, B60K 6/24, B60K 6/442, B60K 6/52, B60W 20/00, F02D 41/30

(54) **VEHICLE EQUIPPED WITH INTERNAL COMBUSTION ENGINE**
FAHRZEUG MIT VERBRENNUNGSMOTOR
VÉHICULE ÉQUIPÉ D'UN MOTEUR À COMBUSTION INTERNE

(43) Date of publication of application: 12.07.2017
(73) Proprietor: Mitsubishi Jidosha Kogyo Kabushiki Kaisha, Tokyo 108-8410 (JP)
(72) Inventor: NISHIDONO, Takehiro, Tokyo 108-8410 (JP)
(74) Representative: Vossius & Partner Patentanwälte Rechtsanwälte mbB
(86) International application number: PCT/JP2014/073354
(87) International publication number: WO 2016/035188

(56) References cited:
- EP-A1- 1 869 305
- WO-A1-2014/024515
- WO-A1-2014/024515
- JP-A- 2000 270 401
- JP-A- 2001 003 779
- JP-A- 2005 061 361
- JP-A- 2014 133 458

## Description

### Technical Field

The present invention relates to a control device for an internal combustion engine that is installed on a vehicle.

### Background Art

Conventionally, an internal combustion engine installed on a vehicle such as an automobile is equipped with a function of driving a generator to cause the generator to generate electric power, and using the electric power in the equipment installed on the vehicle and charging a battery installed on the vehicle.

In particular, vehicles capable of traveling by electric motors like hybrid vehicles and plug-in hybrid vehicles are loaded with batteries of large capacities and need to charge the batteries at many opportunities, and some vehicles charge batteries by operating the internal combustion engines even at vehicle stop times.

Incidentally, as described in JP-2006 291922, a vehicle has been developed, which is capable of in-cylinder fuel injection that directly injects fuel into a cylinder, and intake passage fuel injection that injects fuel into an intake passage simultaneously or selectively, in an internal combustion engine installed on a hybrid vehicle or a plug-in hybrid vehicle. In the vehicle of JP-2006 291922, only intake passage fuel injection is performed at a low speed time with low traveling sound, for example, operation of a high-pressure fuel pump that increases the pressure of the fuel in order to perform in-cylinder fuel injection is suppressed, and reduction in the operation sound can be achieved.

### Prior Art Document

### Patent Document

Japanese Patent 2006-291922 discloses a vehicle with an electric power generator.
WO 2014/024515 A1 relates to an in-cylinder injection valve that inject fuel into the cylinders, and an intake passage injection valve that injects fuel into the intake passage. When it is determined that the accumulated deposits exceed a prescribed amount, fuel is injected forcibly by means of the in-cylinder injection valve (to execute a deposit removal control).

### Summary of the Invention

### Problems to be solved by the Invention

However, in the vehicle in JP-2006 291922, in the situation where electric power generation is required at the time of low-speed traveling, for example, only the intake passage fuel injection is performed without performing the in-cylinder fuel injection, and even if the operation sound of the high-pressure fuel pump is suppressed thereby, there is the fear of uncomfortable knocking sound becomes more conspicuous than the operation sound of the high-pressure fuel pump because the internal combustion engine is operated at low rotational speed and high load. Knocking sound like this becomes more conspicuous when the battery is charged at the vehicle stop time as described above. As the means for avoiding occurrence of knocking sound, retard control that retards ignition timing is known, but has the problem of reducing fuel efficiency because combustion efficiency is reduced.

The present invention is made to solve the problems as above, and an object of the present invention is to provide a vehicle capable of reducing knocking sound while ensuring combustion efficiency of an internal combustion engine in a vehicle loaded with the internal combustion engine capable of in-cylinder fuel injection and intake passage fuel injection.

### Means for Solving the Problems

In order to attain the above described object, a vehicle equipped with an internal combustion engine of the present invention has a first fuel injection section that directly injects fuel into a cylinder of the internal combustion engine, a second fuel injection section that injects fuel into an intake passage of the internal combustion engine, a rotary electric machine that is connected to an output shaft of the internal combustion engine, a battery that stores electric power generated by the rotary electric machine, and a control unit that operates the internal combustion engine to generate electric power by the rotary electric machine in accordance with a state of charge of the battery to charge the battery, and performs fuel injection by the first fuel injection section at a time of the operation.

Thereby, at the time of charging the battery, fuel is directly injected into the cylinder by the first fuel injection section to operate the internal combustion engine, and therefore, occurrence of knocking sound is suppressed by a cooling effect by vaporization of the fuel.

### Advantageous Effects of the Invention

According to the present invention, at the time of generating electric power in accordance with the state of charge of the battery, knocking sound can be reduced through the in-cylinder fuel injection so that, for example, in the situation where the load increases by electric power generation in the low noise state as in a low load operation time and a low vehicle speed time, knocking sound that is more conspicuous than the operation sound of the high-pressure fuel pump for in-cylinder injection is reduced, and generated sound as the entire vehicle is suppressed to be able to enhance comfortableness. Further, it becomes unnecessary to perform retard control in order to reduce knocking sound, combustion efficiency is ensured, and fuel efficiency can be enhanced.

### Brief Description of the Drawings

FIG. 1 is a schematic configuration diagram of a plug-in hybrid vehicle according to one embodiment of the present invention.
FIG. 2 is a sectional view illustrating a structure of an engine in the present embodiment.
FIG. 3 is a map illustrating one example of a selection situation of a fuel injection method in the present embodiment.
FIG. 4 is a flowchart illustrating a selection control procedure of a fuel injection method by an electric power generation request in the present embodiment.

### Mode for Carrying out the Invention

Hereinafter, an embodiment of the present invention will be described based on the drawings.

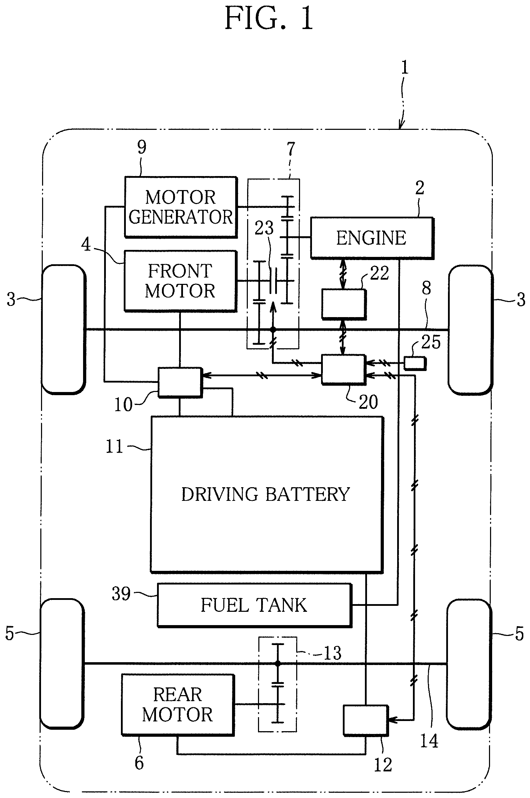

FIG. 1 is a schematic configuration diagram of a plug-in hybrid vehicle (hereinafter, referred to as a vehicle 1) according to one embodiment of the present invention.

The vehicle 1 (the vehicle equipped with an internal combustion engine) of the present embodiment is a four-wheel drive vehicle that is capable of traveling by driving front wheels 3 by output power of the engine 2 (the internal combustion engine), and includes an electrically driven front motor 4 that drives the front wheels 3 and an electrically driven rear motor 6 that drives rear wheels 5.

The engine 2 is capable of driving a drive shaft 8 of the front wheels 3 via a reduction gear 7, and is capable of generate electric power by driving a motor generator 9 (a rotary electric machine) via the reduction gear 7. Further, the motor generator 9 has a function of driving by being supplied with electric power from a driving battery 11 (a battery) installed on the vehicle 1, and starting the engine 2.

The front motor 4 drives by being supplied with high-voltage electric power from the driving battery 11 and the motor generator 9 via a front control unit 10, and drives the drive shaft 8 of the front wheels 3 via the reduction gear 7. In the reduction gear 7, a clutch 23 capable of switching connection and disconnection of transmission of power between an output shaft of the engine 2 and the drive shaft 8 of the front wheels 3 is incorporated.

The rear motor 6 drives by being supplied with high-voltage electric power from the driving battery 11 via a rear control unit 12, and drives a drive shaft 14 of the rear wheels 5 via a reduction gear 13.

The electric power generated by the motor generator 9 is capable of charging the driving battery 11 via the front control unit 10, and is capable of supplying electric power to the front motor 4 and the rear motor 6.

The driving battery 11 is configured by a secondary battery such as a lithium ion battery, and has a battery module not illustrated that is configured by combining a plurality of battery cells.

The front control unit 10 has a function of controlling an output power of the front motor 4 based on a control signal from a hybrid control unit 20 (a vehicle control unit, a control unit) installed on the vehicle 1, and controlling an electric power generation amount of the motor generator 9.

The rear control unit 12 has a function of controlling an output power of the rear motor 6 based on a control signal from the hybrid control unit 20.

An engine control unit 22 (an internal combustion engine control unit, a control unit) performs drive control of the engine 2 by controlling a fuel injection amount, a fuel injection timing, an intake air amount and the like to the engine 2, based on a control signal (a request output) from the hybrid control unit 20.

Further, the vehicle 1 is equipped with a charger not illustrated that charges the driving battery 11 by an external power supply.

The hybrid control unit 20 is a control device for performing comprehensive control of the vehicle 1, and is configured by including an input/output device, a storage device (a ROM, a RAM, a nonvolatile RAM, etc.), a central processing unit (CPU), a timer and the like.

To an input side of the hybrid control unit 20, the front control unit 10, the rear control unit 12, and the engine control unit 22 are connected, and detection and operation information from these devices are inputted.

Meanwhile, to an output side of the hybrid control unit 20, the front control unit 10, the rear control unit 12, the engine control unit 22, and the clutch 23 of the reduction gear 7 are connected.

The hybrid control unit 20 calculates a vehicle request output power required for traveling drive of the vehicle 1 based on various detection amounts such as accelerator operation information and various kinds of information of the vehicle 1, transmits control signals to the engine control unit 22, the front control unit 10, the rear control unit 12, and the reduction gear 7, and controls switching of a travel mode (an EV mode, a series mode, a parallel mode), output powers of the engine 2, the front motor 4 and the rear motor 6, and an output power (generation electric power) of the motor generator 9.

In the EV mode, the engine 2 is stopped, and the vehicle is caused to travel by driving the front motor 4 and the rear motor 6 by the electric power that is supplied from the driving battery 11.

In the series mode, the clutch 23 of the reduction gear 7 is discontinued, and the motor generator 9 is operated by the engine 2. Subsequently, the vehicle is caused to travel by driving the front motor 4 and the rear motor 6 by the electric power that is generated by the motor generator 9 and the electric power that is supplied from the driving battery 11. Further, in the series mode, a speed of the engine 2 is set at a predetermined value, and electric power generated by excess output power is supplied to the driving battery 11 to charge the driving battery 11.

In the parallel mode, the clutch 23 of the reduction gear 7 is connected, and the front wheels 3 are driven by mechanically transmitting power via the reduction gear 7 from the engine 2. Further, the vehicle is caused to travel by driving the front motor 4 and the rear motor 6 by electric power generated by operating the motor generator 9 by the engine 2 and the electric power that is supplied from the driving battery 11.

The hybrid control unit 20 sets the travel mode at the parallel mode in a region where efficiency of the engine 2 is favorable as in a high speed region. Further, in regions except for the parallel mode, that is, in low and medium speed regions, the travel mode is switched between the EV mode and the series mode based on a charging rate SOC (state of charge) of the driving battery 11.

The hybrid control unit 20 further has a function of electric power generation under stop of the vehicle that forcibly drives the engine 2 to generate electric power to charge the driving battery 11 even when the vehicle 1 is stopped and the engine 2 is stopped, when the charging rate SOC of the driving battery 11 is reduced to be lower than an allowable range. At the time of electric power generation under stop of the vehicle, the series mode is selected.

Further, the vehicle 1 is equipped with a charge mode switch 25 (a forcible charge request section) that instructs the charge mode that forcibly charges the driving battery 11. When the charge mode is instructed by an operation of the charge mode switch 25 by a driver or the like, the hybrid control unit 20 drives the engine 2 to operate the motor generator 9 to generate electric power, and forcibly charges the driving battery 11 so that the driving battery 11 is fully charged, irrespective of the charging rate SOC of the driving battery 11. When the engine 2 is stopped when the charge mode switch 25 is operated, the engine 2 is forcibly started to perform charging.

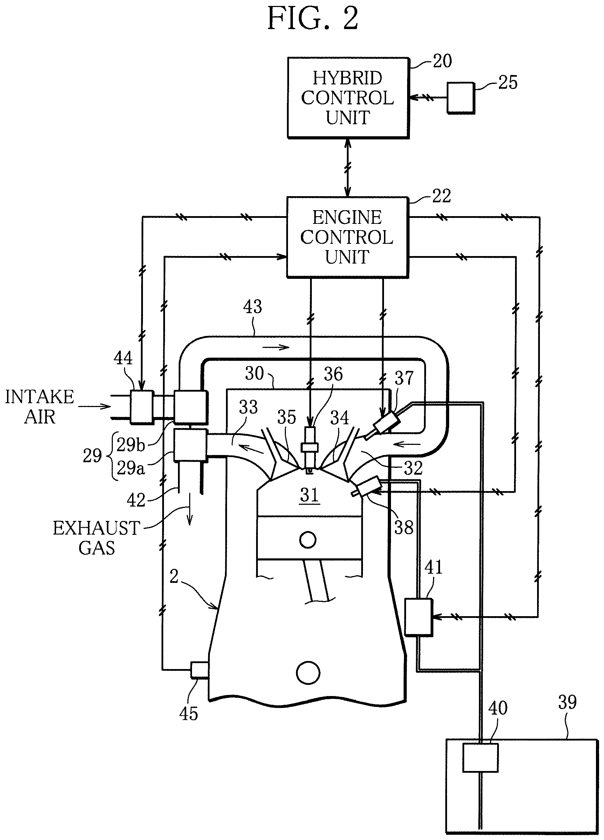

FIG. 2 is a sectional view illustrating a schematic configuration of the engine 2 of the present embodiment.

As illustrated in Fig. 2, the engine 2 according to the present embodiment is a multiple-cylinder gasoline engine equipped with a turbocharger 29 (a supercharger). FIG. 2 illustrates an internal structure of one cylinder, and the other cylinders have the similar structures.

In a cylinder head 30 of the engine 2, an intake port 32 (an intake passage) and an exhaust port 33 that communicate with a combustion chamber 31 are provided, and an intake valve 34 that opens and closes a space between the intake port 32 and the combustion chamber 31, an exhaust valve 35 that opens and closes a space between the exhaust port 33 and the combustion chamber 31, and an ignition plug 36 in which electrodes are disposed to face the combustion chamber 31 are provided.

Further, the cylinder head 30 of the engine 2 of the present embodiment is equipped with an intake passage fuel injection valve 37 (a second fuel injection section) that injects fuel into the intake port 32, and an in-cylinder fuel injection valve 38 (a first fuel injection section) that directly injects fuel into the combustion chamber 31 (into a cylinder).

The intake passage fuel injection valve 37 has an injection port disposed in the intake port 32, and injects low-pressure fuel that is supplied from a fuel tank 39 installed on a vehicle rear portion by a feed pump 40 into the intake port 32. Fuel injection by the intake passage fuel injection valve 37 is referred to as intake passage fuel injection (MPI injection).

The in-cylinder fuel injection valve 38 has an injection port disposed in the combustion chamber 31, and injects high-pressure fuel supplied from a high pressure fuel pump 41 into the combustion chamber 31. The high-pressure fuel pump 41 raises a pressure of the low-pressure fuel supplied from the feed pump 40 to supply the fuel to the in-cylinder fuel injection valve 38. Fuel injection by the in-cylinder fuel injection valve 38 is referred to as in-cylinder fuel injection (DI injection).

In an exhaust passage 42 connected to the exhaust port 33 of the engine 2, a turbine 29a of the turbocharger 29 is disposed, a compressor 29b of the turbocharger 29 is disposed in an intake passage 43 connected to the intake port 32, the turbine 29a is rotationally driven by exhaust pressure, and intake air in the intake passage 43 is turbocharged to the intake port 32 side by the compressor 29b that rotates with the turbine 29a.

At an upstream side of the compressor 29b in the intake passage 43, an air flow valve 44 that controls an intake air amount is provided.

The engine control unit 22 is a control device for performing control of the engine 2, and is configured by including an input/output device, a storage device (a ROM, a RAM, a nonvolatile RAM, etc.), a central processing unit (CPU), a timer and the like.

To an input side of the engine control unit 22, the hybrid control unit 20, an engine speed sensor 45 that detects an engine speed of the engine 2, an intake pressure sensor not illustrated and the like are connected, and detection and operation information from these devices are inputted.

Meanwhile, to an output side of the engine control unit 22, the hybrid control unit 20, the air flow valve 44, the ignition plug 36, the intake passage fuel injection valve 37, the in-cylinder fuel injection valve 38 and the like are connected.

Subsequently, the engine control unit 22 controls the air flow valve 44, the ignition plug 36, the intake passage fuel injection valve 37, the in-cylinder fuel injection valve 38, the high-pressure fuel pump 41 and the like, so as to obtain a request output which is received from the hybrid control unit 20.

In the present embodiment, the engine control unit 22 further selects MPI injection by the intake passage fuel injection valve 37, or MPI+DI injection that injects fuel by both the intake passage fuel injection valve 37 and the in-cylinder fuel injection valve 38 based on a vehicle state, and changes the fuel injection method of the engine 2, at an operation request time of the engine 2.

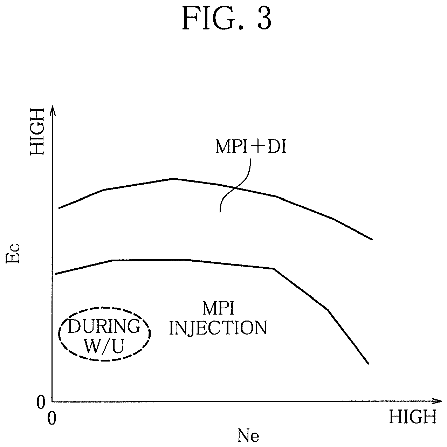

FIG. 3 is a map illustrating one example of a selection situation of the fuel injection method in the present embodiment.

As illustrated in Fig. 3, in the engine 2 of the present embodiment, MPI+DI injection is selected when an engine speed Ne or a charging efficiency Ec is high, that is, when the output power of the engine 2 is high, and when the engine speed Ne and the charging efficiency Ec are low, that is, when the output power of the engine 2 is low, MPI injection is performed. The charging efficiency Ec is a value relating to output torque of the engine 2.

Further, during warm-up (during W/U) until a predetermined time period elapses after engine starts, MPI+DI injection is selected. DI injection at this time discharges unburned fuel into exhaust gas to raise an exhaust gas temperature, and activates an exhaust gas purification catalyst not illustrated that is provided in the exhaust passage 42.

Furthermore, in the present embodiment, the engine control unit 22 selects MPI+DI injection when an electric power generation request is issued from the hybrid control unit 20 as at the time of electric power generation under stop of the vehicle and at the time of operation of the charge mode switch 25, in the region where the charging efficiency Ec is low and MPI injection is selected.

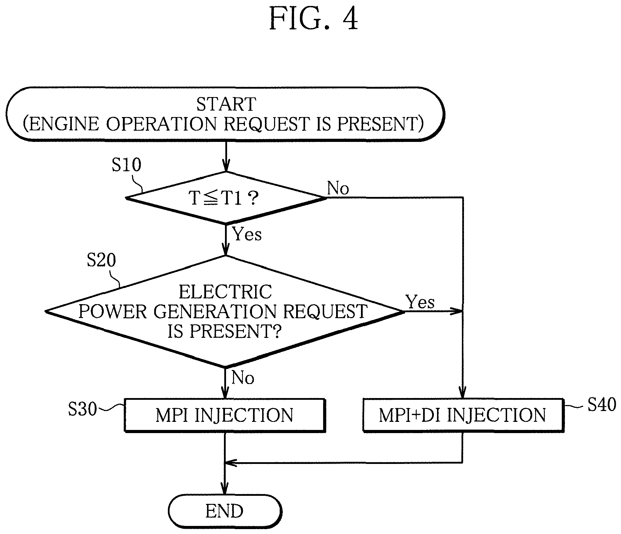

FIG. 4 is a flowchart illustrating a selection control procedure of the fuel injection method by an electric power generation request.

The engine control unit 22 repeatedly executes the present control when an operation request of the engine 2 is issued from the hybrid control unit 20.

At first, in step S10, it is determined whether or not an output torque T of the engine 2 is a predetermined value T1 or less. The output torque T of the engine 2 can be obtained from the charging efficiency Ec calculated based on the intake air amount of the engine 2, for example. The predetermined value T1 can be set at an output torque corresponding to an upper limit value of the charging efficiency Ec of fuel injection performed by only MPI injection in FIG. 3. When the output torque T of the engine 2 is the predetermined value T1 (the predetermined load) or less, the flow goes to step S20. When the output torque T of the engine 2 is larger than the predetermined value T1, the flow goes to step S40. In the present step, determination may be made based on a vehicle speed instead of the output torque T of the engine 2. For example, when the vehicle speed is a predetermined vehicle speed V1 or less, the flow goes to step S20, and when the vehicle speed is larger than the predetermined vehicle speed V1, the flow goes to step S40. The predetermined vehicle speed V1 can be set at an upper limit value of a vehicle speed of the fuel injection performed by only MPI injection.

In step S20, it is determined whether or not an electric power generation request is present. The electric power generation request is a request to generate power by driving the motor generator 9 by the hybrid control unit 20, for example, due to increase in electric power consumption amount, reduction in the charged capacity of the battery or the like. When the power generation request is present, the flow goes to step S40. When the power generation request is absent, the flow goes to step S30.

In step S30, MPI injection that performs fuel injection by only the intake passage fuel injection valve 37 is selected. Subsequently, the present routine is ended.

In step S40, MPI+DI injection that performs fuel injection with both of the intake passage fuel injection valve 37 and the in-cylinder fuel injection valve 38 is selected. Subsequently, the present routine is ended.

As above, in the present embodiment, the engine 2 is equipped with the two kinds of fuel injection valves that are the in-cylinder fuel injection valve 38 and the intake passage fuel injection valve 37, and is capable of both MPI injection and DI injection. At the time of a low load operation (or at a low vehicle speed time) at which the charging efficiency Ec is low, only MPI injection is performed, and DI injection is not performed, whereby operation of the high-pressure fuel pump 41 for supplying high-pressure fuel to the in-cylinder fuel injection valve 38 is suppressed, and occurrence of operation sound can be suppressed. Further, at the time of a high load operation (or at a high vehicle speed time) at which the charging efficiency Ec is high, both of MPI injection and DI injection are performed, whereby a fuel injection amount is increased, and output power can be ensured.

In the present embodiment, MPI+DI injection is selected when the charging rate SOC of the driving battery 11 is reduced, or the charge mode switch 25 is operated, and an electric power generation request is issued, at the time of the low-load driving at which the charging efficiency Ec in the case of only MPI injection being set to be performed as described above is low. When a load by electric power generation is applied at the driving time in a low noise driving state such as at the time of the low-load driving, knocking sound easily occurs from the engine 2, and knocking sound at a high frequency is likely to be conspicuous, but in the present embodiment, DI injection is further performed in addition to MPI injection, whereby occurrence of knocking sound is suppressed by a cooling effect by fuel injection into the cylinder. Further, it becomes unnecessary to retard ignition timing to avoid occurrence of the knocking sound, so that combustion efficiency of the engine 2 is enhanced, and fuel efficiency can be enhanced.

Further, at this time, not only DI injection but also MPI injection is performed, whereby an injection amount by DI injection can be suppressed to an amount necessary to avoid occurrence of the knocking sound, and operation sound of the high-pressure fuel pump 41 can be reduced.

In particular, when an electric power generation request is received in a low load state without a traveling load as at the time of electric power generation under stop of the vehicle, performing DI injection as in the present embodiment is significantly effective in reduction in noise.

Further, when a charge request is issued due to reduction in the charged capacity or the like of the battery not only at the time of electric power generation under stop of the vehicle, but also under a situation where knocking sound is likely to occur due to increase in load by electric power generation such as at a time of a low vehicle speed, MPI+DI injection is performed, whereby occurrence of knocking sound is suppressed by DI injection.

In the vehicle 1 of the present embodiment, the travel mode is switched to the parallel mode, the series mode to the EV mode, and only in traveling in the parallel mode, necessity or unnecessity of an electric power generation request is likely to be switched. Accordingly, at a time of a low load or a low vehicle speed at the vehicle traveling time in the parallel mode, MPI injection by the intake passage fuel injection valve 37 is performed when an electric power generation request is absent, and MPI+DI injection is performed when an electric power generation request is received. In this manner, in the present embodiment, switching the injection method of fuel in accordance with necessity or unnecessity of an electric power generation request becomes effective in noise reduction, during vehicle travel in the parallel mode.

Further, when the charging rate SOC of the driving battery 11 is reduced to be lower than the allowable range, the hybrid control unit 20 issues an electric power generation request, and the hybrid control unit 20 can be set to issue an electric power generation request when the charging rate SOC of the driving battery 11 is reduced to a first predetermined value or less during travel of the vehicle, and to issue the electric power generation request when the charging rate SOC of the driving battery 11 is reduced to a second predetermined value that is lower than the first predetermined value or less during stop of the vehicle. When the engine 2 is stopped during stop of the vehicle, when the charging rate SOC is reduced to the second predetermined value or less, an electric power generation request is issued and the motor generator 9 is driven to start the engine 2. In this way, when the charging rate SOC of the driving battery 11 is significantly reduced during stop of the vehicle, an electric power generation request is issued to start the engine 2, and therefore the operation frequency of the engine 2 is suppressed, which is further effective in noise reduction.

Further, the engine 2 is equipped with the turbocharger 29, and the engine control unit 22 can perform power generation time fuel injection control that performs MPI+DI injection exclusively at a non-turbocharging time when an electric power generation request is issued. By setting the power generation time fuel injection control exclusively at the non-turbocharging time, DI injection is performed at a low output torque time such as a non-turbocharging time in which knocking sound easily occurs, whereby knocking sound is effectively reduced.

Further, the engine control unit 22 may perform control of a wastegate valve or the like so that even when the engine 2 is in a turbocharging region, the engine 2 is not turbocharged when the engine control unit 22 performs power generation time fuel injection control at the time of request of electric power generation. By forcibly bringing about non-turbocharging, DI injection is performed in a state where the output torque is reliably suppressed, and knocking sound is effectively reduced.

Explanation of the embodiment of the invention will be ended here, the mode of the invention is not limited to the present embodiment.

For example, in the present embodiment, MPI injection is performed at a low load time, and when an electric power generation request is issued in the region where the MPI injection is performed, MPI+DI injection is performed, but in an engine in which only MPI injection is performed irrespective of a load, MPI+DI injection may be performed when an electric power generation request is issued. In this way, at least DI injection can be performed when an electric power generation request is issued, and the injection methods at the times other than the electric power generation request time may be properly changed.

Further, the present invention may be applied to an engine equipped with a supercharger other than a turbocharger such as a supercharger, or may be applied to an engine that is not equipped with a supercharger.

Further, in the present embodiment, the present invention is applied to the plug-in hybrid vehicle switchable to the EV-mode, the series mode and the parallel mode, and the vehicle is switched to the series mode with respect to an electric power generation request, but the present invention is applicable to various types of hybrid vehicles or plug-in hybrid vehicles irrespective of various modes.

Further, the hybrid control unit 20 and the engine control unit 22 may be integrated into one control unit. The invention of the present application can be widely applied to vehicles having internal combustion engines capable of in-cylinder fuel injection and intake passage fuel injection.

### Explanation of Reference Signs

2 engine (internal combustion engine)
9 motor generator
11 driving battery (battery)
20 hybrid control unit (vehicle control unit, control unit)
22 engine control unit (internal combustion engine control unit, control unit)
23 clutch
25 charge mode switch (forcible charge request section)
29 turbocharger (supercharger)
31 combustion chamber (in cylinder)
32 intake port (intake passage)
37 intake passage fuel injection valve (second fuel injection section)
38 in-cylinder fuel injection valve (first fuel injection section)
41 high-pressure fuel pump

## Claims

1. A vehicle (1) equipped with an internal combustion engine (2), comprising:
a first fuel injection section (38) that directly injects fuel into a cylinder (31) of the internal combustion engine (2);
a second fuel injection section (37) that injects fuel into an intake passage (32) of the internal combustion engine (2);
a motor generator (9) that is connected to an output shaft of the internal combustion engine (2);
a battery that stores electric power generated by the motor generator; and
a control unit (20, 22) that operates the internal combustion engine (2) to generate electric power by the motor generator (9) in accordance with a state of charge of the battery (11) to charge the battery (11),**characterized in that** the control unit (20, 22) comprises:
a vehicle control unit (20) that determines a power generation amount in accordance with the state of charge of the battery (11) and requests the internal combustion engine (2) to operate; and
an internal combustion engine control unit (22) that operates the internal combustion engine (2) by a request from the vehicle control unit (20), and
the internal combustion engine control unit (22) performs fuel injection by the first fuel injection section (38) when operating the internal combustion engine (2) by being requested to generate electric power by the vehicle control unit (20), wherein the control unit (20, 22) performs fuel injection by the first fuel injection section (38) in addition to fuel injection by the second fuel injection section (37) when driving the motor generator (9).

2. The vehicle (1) equipped with an internal combustion engine (2) according to claim 1,
wherein when operating the internal combustion engine (2) under a predetermined load or less, or at a predetermined vehicle speed or less, the internal combustion engine control unit (22) operates by injecting fuel by the second fuel injection section (37), and when requested to generate electric power by the vehicle control unit (20) during operation under the predetermined load or at the predetermined vehicle speed or less, the internal combustion engine control unit (22) operates by injecting fuel by the first fuel injection section (38).

3. The vehicle (1) equipped with an internal combustion engine (2) according to claim 1,
wherein when the vehicle (1) is traveling, the vehicle control unit (20) requests the internal combustion engine control unit (22) to generate electric power when the state of charge of the battery (11) becomes lower than a first predetermined value, whereas when the vehicle (1) is stopped, the vehicle control unit requests the internal combustion engine control unit (20) to generate electric power when the state of charge of the battery (11) becomes lower than a second predetermined value that is smaller than the first predetermined value.

4. The vehicle (1) equipped with an internal combustion engine (2) according to claim 1, further comprising:
a forcible charge request section (25) that forcibly charges irrespective of the state of charge of the battery (11), and
the vehicle control unit (20) requests the internal combustion engine control unit (22) to generate electric power when forcible charge is requested by the forcible charge request section (25), when the vehicle (1) is stopped.

5. The vehicle (1) equipped with an internal combustion engine (2) according to claim 1,
wherein the internal combustion engine (2) comprises a supercharger (29), and
the internal combustion engine control unit (22) operates the internal combustion engine (2) in a non-supercharging region of the supercharger (29) when operating the internal combustion engine (2) by a request to generate power from the vehicle control unit (20).

6. The vehicle (1) equipped with an internal combustion engine (2) according to claim 1,
wherein the internal combustion engine (2) is connected to drive wheels (3) of the vehicle (1) via a clutch (23), and
the internal combustion engine control unit (22) operates the internal combustion engine (2) by injecting fuel by the second fuel injection section (37) when driving the drive wheels (3) by connecting the clutch (23) under a predetermined load or less, or at a predetermined vehicle speed or less, and operates the internal combustion engine (2) by injecting fuel by the first fuel injection section (38) when requested to generate electric power by the vehicle control unit (20) during operation under the predetermined load or less, or at the predetermined vehicle speed or less.

7. The vehicle (1) equipped with an internal combustion engine (2) according to claim 1,
wherein when the vehicle (1) is traveling, the vehicle control unit (20) requests the internal combustion engine control unit (22) to generate electric power when the state of charge of the battery (11) becomes lower than a first predetermined value, whereas when the vehicle (1) is stopped and the internal combustion engine (2) is stopped and when the state of charge of the battery (11) becomes lower than a second predetermined value that is smaller than the first predetermined value, the vehicle control unit (20) requests the internal combustion engine control unit (22) to generate electric power and drives the motor generator (9) to start the internal combustion engine (2).

8. The vehicle (1) equipped with an internal combustion engine (2) according to claim 1, further comprising:
a forcible charge request section (25) that forcibly charges irrespective of the state of charge of the battery (11),
wherein the vehicle control unit (20) requests the internal combustion engine control unit (22) to generate electric power and drives the motor generator (9) to start the internal combustion engine (2), when forcible charge is requested by the forcible charge request section (25) when the vehicle (1) is stopping and the internal combustion engine (2) is stopping.

## Patentansprüche

1. Fahrzeug (1), das mit einem Verbrennungsmotor (2) ausgestattet ist, mit:
einem ersten Kraftstoffeinspritzabschnitt (38), der Kraftstoff in einen Zylinder (31) des Verbrennungsmotors (2) direkt einspritzt;
einem zweiten Kraftstoffeinspritzabschnitt (37), der Kraftstoff in einen Einlasskanal (32) des Verbrennungsmotors (2) einspritzt;
einem Motorgenerator (9), der mit einer Ausgangswelle des Verbrennungsmotors (2) verbunden ist;
einer Batterie, die elektrischen Strom speichert, der durch den Motorgenerator erzeugt wird; und
einer Steuereinheit (20, 22), die den Verbrennungsmotor (2) betreibt, um elektrischen Strom durch den Motorgenerator (9) in Übereinstimmung mit einem Ladezustand der Batterie (11) zu erzeugen, um die Batterie (11) zu laden, **dadurch gekennzeichnet, dass** die Steuereinheit (20, 22) aufweist:
eine Fahrzeugsteuereinheit (20), die eine Stromerzeugungsmenge in Übereinstimmung mit dem Ladezustand der Batterie (11) bestimmt und den Verbrennungsmotor (2) auffordert zu arbeiten; und
eine Verbrennungsmotorsteuereinheit (22), die den Verbrennungsmotor (2) durch eine Aufforderung von der Fahrzeugsteuereinheit (20) betreibt, und
die Verbrennungsmotorsteuereinheit (22) Kraftstoffeinspritzung durch den ersten Kraftstoffeinspritzabschnitt (38) durchführt, wenn sie den Verbrennungsmotor (2) betreibt, indem sie durch die Fahrzeugsteuereinheit (20) aufgefordert wird, elektrischen Strom zu erzeugen, wobei die Steuereinheit (20, 22) Kraftstoffeinspritzung durch den ersten Kraftstoffeinspritzabschnitt (38) zusätzlich zu Kraftstoffeinspritzung durch den zweiten Kraftstoffeinspritzabschnitt (37) durchführt, wenn sie den Motorgenerator (9) antreibt.

2. Fahrzeug (1), das mit einem Verbrennungsmotor (2) ausgestattet ist, nach Anspruch 1,
wobei bei Betrieb des Verbrennungsmotors (2) unter einer vorbestimmten Last oder darunter oder bei einer vorbestimmten Fahrzeuggeschwindigkeit oder darunter, die Verbrennungsmotorsteuereinheit (22) arbeitet, indem sie Kraftstoff durch den zweiten Kraftstoffeinspritzabschnitt (37) einspritzt, und bei Aufforderung durch die Fahrzeugsteuereinheit (20), während des Betriebs unter der vorbestimmten Last oder darunter oder bei der vorbestimmten Fahrzeuggeschwindigkeit oder darunter elektrischen Strom zu erzeugen, die Verbrennungsmotorsteuereinheit (22) arbeitet, indem sie Kraftstoff durch den ersten Kraftstoffeinspritzabschnitt (38) einspritzt.

3. Fahrzeug (1), das mit einem Verbrennungsmotor (2) ausgestattet ist, nach Anspruch 1,
wobei bei Fahrt des Fahrzeugs (1) die Fahrzeugsteuereinheit (20) die Verbrennungsmotorsteuereinheit (22) auffordert, elektrischen Strom zu erzeugen, wenn der Ladezustand der Batterie (11) niedriger als ein erster vorbestimmter Wert wird, wogegen bei Stopp des Fahrzeugs (1) die Fahrzeugsteuereinheit die Verbrennungsmotorsteuereinheit (20) auffordert, elektrischen Strom zu erzeugen, wenn der Ladezustand der Batterie (11) niedriger als ein zweiter vorbestimmter Wert wird, der kleiner als der erste vorbestimmte Wert ist.

4. Fahrzeug (1), das mit einem Verbrennungsmotor (2) ausgestattet ist, nach Anspruch 1, ferner mit:
einem Zwangsladungsanforderungsabschnitt (25), der unabhängig vom Ladezustand der Batterie (11) zwangsweise lädt, und
die Fahrzeugsteuereinheit (20) die Verbrennungsmotorsteuereinheit (22) auffordert, elektrischen Strom zu erzeugen, wenn Zwangsladung durch den Zwangsladungsanforderungsabschnitt (25) angefordert wird, wenn das Fahrzeug (1) gestoppt ist.

5. Fahrzeug (1), das mit einem Verbrennungsmotor (2) ausgestattet ist, nach Anspruch 1,
wobei der Verbrennungsmotor (2) einen Lader (29) aufweist und
die Verbrennungsmotorsteuereinheit (22) den Verbrennungsmotor (2) in einem Nichtladebereich des Laders (29) betreibt, wenn sie den Verbrennungsmotor (2) durch eine Aufforderung, Strom zu erzeugen, von der Fahrzeugsteuereinheit (20) betreibt.

6. Fahrzeug (1), das mit einem Verbrennungsmotor (2) ausgestattet ist, nach Anspruch 1,
wobei der Verbrennungsmotor (2) mit Antriebsrädern (3) des Fahrzeugs (1) über eine Kupplung (23) verbunden ist und
die Verbrennungsmotorsteuereinheit (22) den Verbrennungsmotor (2) betreibt, indem sie Kraftstoff durch den zweiten Kraftstoffeinspritzabschnitt (37) einspritzt, wenn die Antriebsräder (3) durch Verbinden der Kupplung (23) unter einer vorbestimmten Last oder darunter, oder bei einer vorbestimmten Fahrzeuggeschwindigkeit oder darunter angetrieben werden, und den Verbrennungsmotor (2) betreibt, indem sie Kraftstoff durch den ersten Kraftstoffeinspritzabschnitt (38) einspritzt, wenn sie durch die Fahrzeugsteuereinheit (20) während des Betriebs unter der vorbestimmten Last oder darunter oder bei der vorbestimmten Fahrzeuggeschwindigkeit oder darunter aufgefordert wird, Strom zu erzeugen.

7. Fahrzeug (1), das mit einem Verbrennungsmotor (2) ausgestattet ist, nach Anspruch 1,
wobei bei Fahrt des Fahrzeugs (1) die Fahrzeugsteuereinheit (20) die Verbrennungsmotorsteuereinheit (22) auffordert, elektrischen Strom zu erzeugen, wenn der Ladezustand der Batterie (11) niedriger als ein erster vorbestimmter Wert wird, wogegen dann, wenn bei Stopp des Fahrzeugs (1) und Stopp des Verbrennungsmotors (2) sowie bei niedrigerem Ladezustand der Batterie (11) als ein zweiter vorbestimmter Wert, der kleiner als der erste vorbestimmte Wert ist, die Fahrzeugsteuereinheit (20) die Verbrennungsmotorsteuereinheit (22) auffordert, elektrischen Strom zu erzeugen, und den Motorgenerator (9) antreibt, um den Verbrennungsmotor (2) zu starten.

8. Fahrzeug (1), das mit einem Verbrennungsmotor (2) ausgestattet ist, nach Anspruch 1, ferner mit:
einem Zwangsladungsanforderungsabschnitt (25), der unabhängig vom Ladezustand der Batterie (11) zwangsweise lädt, und
wobei die Fahrzeugsteuereinheit (20) die Verbrennungsmotorsteuereinheit (22) auffordert, elektrischen Strom zu erzeugen, und den Motorgenerator (9) antreibt, um den Verbrennungsmotor (2) zu starten, wenn Zwangsladung durch den Zwangsladungsanforderungsabschnitt (25) angefordert wird, wenn das Fahrzeug (1) stoppt und der Verbrennungsmotor (2) stoppt.

## Revendications

1. Véhicule (1) équipé d'un moteur à combustion interne (2), comprenant :
une première section d'injection de carburant (38) qui injecte directement du carburant dans un cylindre (31) du moteur à combustion interne (2) ;
une deuxième section d'injection de carburant (37) qui injecte du carburant dans un passage d'admission (32) du moteur à combustion interne (2) ;
un moteur générateur (9) qui est relié à un arbre de sortie du moteur à combustion interne (2) ;
une batterie qui stocke de l'énergie électrique générée par le moteur générateur ; et
une unité de commande (20, 22) qui fait fonctionner le moteur à combustion interne (2) pour générer de l'énergie électrique grâce au moteur générateur (9) en fonction d'un état de charge de la batterie (11) pour charger la batterie (11), **caractérisé en ce que** l'unité de commande (20, 22) comprend :
une unité de commande de véhicule (20) qui détermine une quantité de génération d'énergie en fonction de l'état de charge de la batterie (11) et demande au moteur à combustion interne (2) de fonctionner ; et
une unité de commande de moteur à combustion interne (22) qui fait fonctionner le moteur à combustion interne (2) grâce à une demande provenant de l'unité de commande de véhicule (20), et
l'unité de commande de moteur à combustion interne (22) réalise une injection de carburant grâce à la première section d'injection de carburant (38) lorsque l'on fait fonctionner le moteur à combustion interne (2) suite à une demande pour générer de l'énergie électrique grâce à l'unité de commande de véhicule (20), l'unité de commande (20, 22) réalisant une injection de carburant grâce à la première section d'injection de carburant (38) en plus d'une injection de carburant grâce à la deuxième section d'injection de carburant (37) lors de l'entraînement du moteur générateur (9).

2. Véhicule (1) équipé d'un moteur à combustion interne (2) selon la revendication 1,
dans lequel, lorsque l'on fait fonctionner le moteur à combustion interne (2) sous une charge prédéterminée ou moins, ou à une vitesse de véhicule prédéterminée ou moins, l'unité de commande de moteur à combustion interne (22) fonctionne en injectant du carburant grâce à la deuxième section d'injection de carburant (37), et lorsqu'il a été demandé de générer de l'énergie électrique grâce à l'unité de commande de véhicule (20) pendant un fonctionnement sous la charge prédéterminée ou moins ou à la vitesse de véhicule prédéterminée ou moins, l'unité de commande de moteur à combustion interne (22) fonctionne en injectant du carburant grâce à la première section d'injection de carburant (38).

3. Véhicule (1) équipé d'un moteur à combustion interne (2) selon la revendication 1,
dans lequel, lorsque le véhicule (1) se déplace, l'unité de commande de véhicule (20) demande à l'unité de commande de moteur à combustion interne (22) de générer de l'énergie électrique quand l'état de charge de la batterie (11) devient plus bas qu'une première valeur prédéterminée, alors que quand le véhicule (1) est arrêté, l'unité de commande de véhicule demande à l'unité de commande de moteur à combustion interne (20) de générer de l'énergie électrique quand l'état de charge de la batterie (11) devient plus bas qu'une deuxième valeur prédéterminée qui est plus petite que la première valeur prédéterminée.

4. Véhicule (1) équipé d'un moteur à combustion interne (2) selon la revendication 1, comprenant en outre :
une section de demande de charge forcée (25) qui charge de manière forcée indépendamment de l'état de charge de la batterie (11), et
l'unité de commande de véhicule (20) demande à l'unité de commande de moteur à combustion interne (22) de générer de l'énergie électrique quand une charge forcée est demandée par la section de demande de charge forcée (25), quand le véhicule (1) est arrêté.

5. Véhicule (1) équipé d'un moteur à combustion interne (2) selon la revendication 1,
dans lequel le moteur à combustion interne (2) comprend un dispositif de suralimentation (29), et
l'unité de commande de moteur à combustion interne (22) fait fonctionner le moteur à combustion interne (2) dans une zone sans suralimentation du dispositif de suralimentation (29) lorsque l'on fait fonctionner le moteur à combustion interne (2) grâce à une demande de génération d'énergie provenant de l'unité de commande de véhicule (20).

6. Véhicule (1) équipé d'un moteur à combustion interne (2) selon la revendication 1,
dans lequel le moteur à combustion interne (2) est relié à des roues motrices (3) du véhicule (1) par l'intermédiaire d'un embrayage (23), et
l'unité de commande de moteur à combustion interne (22) fait fonctionner le moteur à combustion interne (2) en injectant du carburant grâce à la deuxième section d'injection de carburant (37) lors de l'entraînement des roues motrices (3) en reliant l'embrayage (23) sous une charge prédéterminée ou moins, ou à une vitesse de véhicule prédéterminée ou moins, et fait fonctionner le moteur à combustion interne (2) en injectant du carburant grâce à la première section d'injection de carburant (38) lorsqu'il est demandé de générer de l'énergie électrique grâce à l'unité de commande de véhicule (20) lors d'un fonctionnement sous la charge prédéterminée ou moins, ou à la vitesse de véhicule prédéterminée ou moins.

7. Véhicule (1) équipé d'un moteur à combustion interne (2) selon la revendication 1,
dans lequel, quand le véhicule (1) se déplace, l'unité de commande de véhicule (20) demande à l'unité de commande de moteur à combustion interne (22) de générer de l'énergie électrique quand l'état de charge de la batterie (11) devient plus bas qu'une première valeur prédéterminée, alors que quand le véhicule (1) est arrêté et le moteur à combustion interne (2) est arrêté et quand l'état de charge de la batterie (11) devient plus bas qu'une deuxième valeur prédéterminée qui est plus petite que la première valeur prédéterminée, l'unité de commande de véhicule (20) demande à l'unité de commande de moteur à combustion interne (22) de générer de l'énergie électrique et commande le moteur générateur (9) pour démarrer le moteur à combustion interne (2).

8. Véhicule (1) équipé d'un moteur à combustion interne (2) selon la revendication 1, comprenant en outre :
une section de demande de charge forcée (25) qui charge de manière forcée indépendamment de l'état de charge de la batterie (11),
l'unité de commande de véhicule (20) demandant à l'unité de commande de moteur à combustion interne (22) de générer de l'énergie électrique et commandant le moteur générateur (9) pour démarrer le moteur à combustion interne (2), quand une charge forcée est demandée par la section de demande de charge forcée (25) quand le véhicule (1) s'arrête et le moteur à combustion interne (2) s'arrête.
